# FASCICULE DE BREVET EUROPEEN

(11) **EP 2 756 503 B1**
(45) Date de publication et mention de la délivrance du brevet: **11.07.2018**
(21) Numéro de dépôt: 12758468.8
(22) Date de dépôt: 11.09.2012
(51) Int. Cl.: G21C 1/09, G21D 5/00

(54) **DISPOSITIF PASSIF DE RÉGULATION DE PRESSION DANS UNE ENCEINTE, ENCEINTE ET INSTALLATION UTILISANT UN TEL DISPOSITIF**
PASSIVE VORRICHTUNG ZUR DRUCKSTEUERUNG IN EINEM BEHÄLTER, VORRICHTUNG AUFWEISENDE BEHÄLTER UND ANLAGE
PASSIVE DEVICE FOR PRESSURE CONTROL IN A VESSEL, VESSEL AND FACILITY USING THE DEVICE

(30) Priorité: 13.09.2011 FR 1158136
(43) Date de publication de la demande: 23.07.2014
(73) Titulaire: NAVAL GROUP, 75015 Paris (FR)
(72) Inventeur: MELOT, Vincent, 44360 Cordemais (FR); ERRIEN, Béranger, 44340 Bouguenais (FR)
(74) Mandataire: Lavoix
(86) Numéro de dépôt international: PCT/EP2012/067693
(87) Numéro de publication internationale: WO 2013/037747

(56) Documents cités:
- FR-A1- 2 051 868
- US-A- 3 095 012
- US-A- 4 124 067

## Description

La présente invention concerne un dispositif passif de régulation de pression dans une enceinte comportant :
- au moins un ensemble de pulvérisation de fluide dans l'enceinte ;
- une conduite d'alimentation de fluide destinée à fournir du fluide à l'ensemble de pulvérisation.

Des exemples de dispositifs de régulation de pressions sont notamment décrits dans US 3 095 012, FR 2 051 868 ou US 4 124 067.

L'enceinte sous pression est par exemple un pressuriseur de circuit primaire de réacteur nucléaire.

Le réacteur nucléaire est notamment un réacteur nucléaire embarqué dans un engin sous-marin, tel qu'un sous-marin nucléaire d'attaque ou un sous-marin nucléaire lanceur d'engins ou un navire de surface tel qu'un porte-avions, un brise glace, un porte-conteneurs. Plus généralement, le réacteur nucléaire peut être un réacteur nucléaire présent dans une installation de production d'énergie fixe située sur terre, ou immergée dans la mer.

Dans les réacteurs nucléaires à eau chaude sous pression, il est connu de réguler la pression du circuit primaire à l'aide d'un ensemble de régulation comprenant une enceinte pressurisée.

Lorsque la densité du fluide circulant dans le circuit primaire diminue de manière significative, et que le fluide augmente de volume, il est connu par exemple de FR 2 051 868 de dériver une partie du fluide sous pression présent dans le circuit primaire vers une enceinte pressurisée comportant un volume de fluide sous pression et un ciel gazeux.

Pour faire diminuer la pression, une partie du fluide destiné à être introduit dans l'enceinte est prélevée, et est pulvérisée sous forme de gouttelettes dans le ciel gazeux de l'enceinte.

La formation de gouttelettes condense une partie du gaz présent dans le ciel gazeux, ce qui diminue la pression du fluide. Un tel pressuriseur est donc efficace dans la régulation de pression.

Cependant, pour faire fonctionner le pressuriseur décrit dans FR 2 051 868, il est nécessaire d'utiliser un régulateur comportant des vannes pilotées.

En particulier, une première vanne est utilisée pour régler la quantité de fluide entrant dans le pressuriseur et au moins une deuxième vanne pilotée est utilisée pour régler la quantité de fluide devant être pulvérisée dans le ciel gazeux. Le dispositif de régulation de pression est donc complexe.

Compte tenu du nombre élevé de pièces mobiles impliquées dans la régulation, la fiabilité du système s'en trouve affaiblie. Ceci est particulièrement critique dans le cadre d'installations nucléaires embarquées dans des engins sous-marins.

Un but de l'invention est donc de disposer d'un dispositif de régulation de pression dans une installation fonctionnant sous pression qui permette d'effectuer une régulation de manière fiable, peu coûteuse et indépendante des mouvements éventuels de l'installation.

A cet effet, l'invention a pour objet un dispositif du type précité, caractérisé en ce que le dispositif comporte :
- un réceptacle intermédiaire de répartition du fluide, interposé entre la conduite d'alimentation et l'ensemble de pulvérisation, le réceptacle intermédiaire étant raccordé en amont à la conduite d'alimentation et comportant une paroi latérale d'évacuation de fluide délimitant au moins un orifice traversant raccordé à l'ensemble de pulvérisation, et
- au moins une conduite d'évacuation de fluide vers l'enceinte faisant saillie dans le réceptacle intermédiaire en regard de la paroi latérale.

Le dispositif selon l'invention peut comprendre l'une ou plusieurs des caractéristiques suivantes, prise(s) isolément ou suivant toutes combinaisons techniquement possibles :
- il comporte une pluralité de conduites d'évacuation faisant saillie dans le réceptacle intermédiaire, au moins deux conduites d'évacuation débouchant à des hauteurs différentes dans le réceptacle intermédiaire.
- au moins deux conduites d'évacuation faisant saillie dans le réceptacle intermédiaire présentent des sections transversales internes distinctes.
- la ou chaque conduite d'évacuation est disposée dans une région centrale du réceptacle intermédiaire, le réceptacle intermédiaire comportant une région périphérique située autour de la zone centrale dans laquelle débouche la conduite d'alimentation.
- il comporte des moyens de réglage de la hauteur de la ou de chaque conduite d'évacuation faisant saillie dans le réceptacle.
- la paroi latérale délimite une pluralité d'orifices traversants répartis sur sa hauteur.
- la section totale des orifices traversants situés au dessus de la ou de chaque conduite d'évacuation sur la paroi latérale est distincte de la section totale des orifices traversants situés au droit de la conduite d'évacuation.
- la paroi latérale délimite une pluralité d'orifices traversants répartis angulairement autour d'un axe du réceptacle intermédiaire.
- il comporte un organe de répartition du fluide provenant de la conduite d'alimentation, l'organe de répartition étant disposé en regard de la conduite d'alimentation.
- il comporte un flasque de fond, obturant vers le bas la paroi latérale, la conduite d'alimentation débouchant dans le flasque de fond, ou à travers le flasque de fond.
- l'ensemble de pulvérisation de fluide est disposé à l'extérieur et autour de la paroi latérale, l'ensemble de pulvérisation comportant un volume de douche, chaque orifice traversant raccordant le réceptacle intermédiaire au volume de douche.
- l'ensemble de pulvérisation comporte une paroi inférieure délimitant une pluralité de lumières de formation de gouttelettes.

L'invention a également pour objet une enceinte pressurisée, caractérisée en ce qu'elle comporte une cuve contenant un liquide et un ciel gazeux, l'enceinte comportant un dispositif tel que défini plus haut, disposé dans la cuve, l'ensemble de pulvérisation étant disposé dans le ciel gazeux de la cuve, les conduites d'évacuation débouchant dans le liquide.

L'invention a aussi pour objet une installation de production d'énergie comportant une source d'énergie, un échangeur thermique et un circuit primaire de circulation de fluide, raccordant l'échangeur thermique et la source, caractérisée en ce qu'elle comporte une enceinte telle que définie plus haut, raccordée au circuit primaire.

L'installation selon l'invention peut comprendre l'une ou plusieurs des caractéristiques suivantes, prise(s) isolément ou suivant toutes combinaisons techniquement possibles :
- l'installation est embarquée dans un engin sous-marin.

L'invention a également pour objet un procédé de régulation de pression dans une enceinte, du type comprenant les étapes suivantes :
- fourniture d'un dispositif tel que défini plus haut ;
- amenée d'un fluide dans le réceptacle intermédiaire par la conduite d'alimentation de fluide ;
- répartition du fluide amené dans le réceptacle pour faire passer une première partie du fluide à travers le ou chaque orifice traversant et une deuxième partie du fluide à travers la ou chaque conduite de vidange ;
- réception de la première partie du fluide dans l'ensemble de pulvérisation, et pulvérisation du fluide sous forme de gouttelettes hors du dispositif ;
- évacuation de la deuxième partie du fluide à travers la conduite de vidange pour l'amener dans l'enceinte.

L'invention sera mieux comprise à la lecture de la description qui va suivre, donnée uniquement à titre d'exemple, et faite en se référant aux dessins annexés, sur lesquels :
- la figure 1 est une vue schématique d'une première installation de production d'énergie, comportant une enceinte pressurisée munie d'un dispositif de régulation selon l'invention.
- la figure 2 est une vue prise en coupe partielle du dispositif de régulation selon l'invention ;
- la figure 3 est une vue prise en coupe des différentes conduites de vidange de fluide présents dans le dispositif de la figure 1 ;
- la figure 4 est une vue en développée d'un exemple de paroi extérieure délimitant le réceptacle intermédiaire du dispositif de la figure 2.

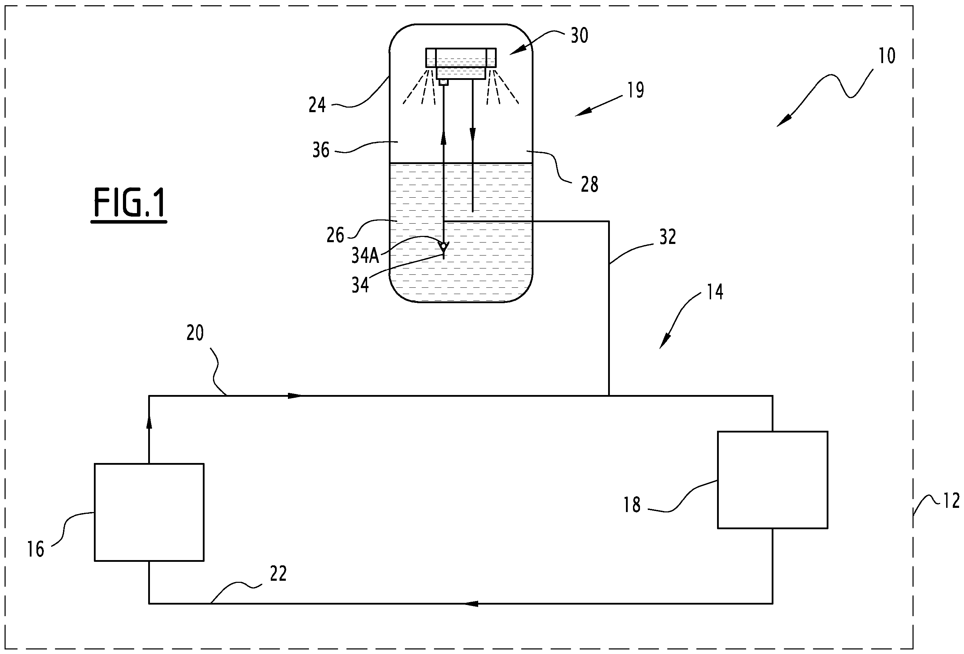

Une première installation 10 de production d'énergie selon l'invention est illustrée par les figures 1 à 4.

Cette installation 10 est notamment destinée à la production d'énergie dans un engin sous-marin 12 tel qu'un sous-marin militaire comme un sous-marin nucléaire d'attaque ou un sous-marin nucléaire lanceur d'engins. En variante, l'installation 10 et montée dans un navire de surface, tel qu'un porte-avions, un brise glace ou un porte-conteneurs.

L'installation 10 est en particulier destinée à produire l'énergie nécessaire à la propulsion et à l'alimentation électrique des équipements présents dans l'engin 12.

De manière connue, l'installation 10 comporte un circuit primaire 14 de circulation d'un fluide primaire, une source d'énergie 16 propre à chauffer le fluide primaire, et un échangeur de chaleur 18 propre à échanger l'énergie présente dans le fluide primaire avec un fluide secondaire, en vue de produire de l'énergie électrique et/ou mécanique. Selon l'invention, l'installation 10 comporte en outre une enceinte 19 pressurisée destinée à la régulation de la pression du fluide primaire.

L'énergie électrique est par exemple produite par circulation du fluide secondaire gazeux dans une turbine d'un générateur.

La source 16 est avantageusement un coeur de réacteur nucléaire. Le coeur comporte du combustible nucléaire. Il est baigné par le fluide primaire en circulation pour réchauffer ce fluide.

Le circuit primaire 14 comporte une conduite chaude 20 raccordant une sortie de la source 16, pour convoyer le fluide primaire réchauffé dans la source 16 vers l'échangeur de chaleur 18, et une conduite froide 22 destinée à recueillir le fluide primaire refroidi issu de l'échangeur de chaleur 18, pour le ramener vers la source 20. Avantageusement, le fluide primaire présent dans le circuit primaire 14 est maintenu sous pression pour être dans l'état liquide.

Comme illustré par la figure 1, l'enceinte pressurisée 19 comporte une cuve 24 contenant un liquide sous pression 26, et un ciel gazeux 28. L'enceinte 19 compte un dispositif passif 30 de régulation selon l'invention disposé dans la cuve 24.

L'enceinte 19 comporte en outre une conduite 32 de communication sous pression entre le circuit primaire 14 et le dispositif de régulation 30, propre à permettre l'amenée de fluide primaire dans le dispositif 30 lors d'une augmentation de pression dans le circuit primaire 14 et propre à recevoir du fluide primaire provenant du dispositif 30 lors d'une baisse de pression dans le circuit primaire 14.

La conduite 32 est dépourvue d'organe de contrôle de débit en aval du point de piquage sur le circuit primaire 14 et en amont du dispositif de régulation 30.

La conduite 32 est également munie d'un piquage 34 d'aspiration de fluide dans le fond de la cuve 24. Le piquage est muni d'une valve anti-retour 34A. Il s'étend en amont du dispositif 30.

La conduite 32 est piquée sur la conduite froide 22 ou sur la conduite chaude 20.

La cuve 24 délimite un volume intérieur 36 contenant le fluide primaire liquide 26 et le ciel gazeux 28. Le volume intérieur 36 est par exemple supérieur à 0,5 m³ et notamment compris entre 2 m³ et 30 m³.

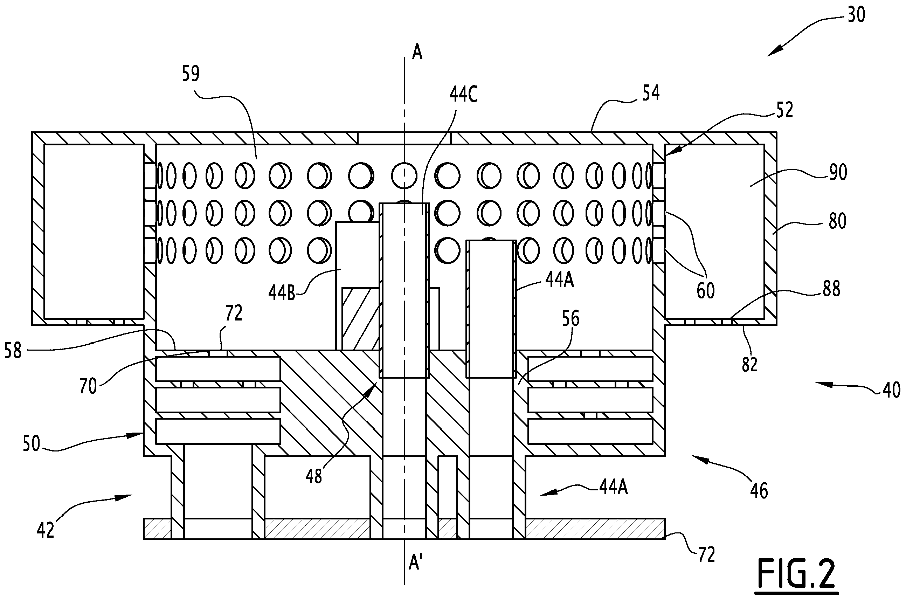

Comme illustré par la figure 1 et la figure 2, le dispositif 30 comporte un ensemble 40 de pulvérisation de liquide dans le ciel gazeux, une conduite 42 d'alimentation en fluide primaire liquide sous pression et une pluralité de conduites 44A à 44D d'évacuation sélective de liquide sous pression vers le volume intérieur 36.

Selon l'invention, le dispositif de régulation 30 comporte en outre un réceptacle intermédiaire 46 dans lequel débouchent les conduites 42, 44A à 44D, le réceptacle 46 étant destiné à répartir automatiquement le fluide primaire liquide reçu de la conduite d'alimentation entre l'ensemble de pulvérisation 40 et les conduites d'évacuation 44A à 44D. Il comporte en outre des moyens de réglage 48 de la hauteur de chaque conduite d'évacuation 44A à 44D.

Comme illustré par la figure 2, le réceptacle intermédiaire 46 comporte un flasque de fond 50, une paroi latérale 52 de communication avec l'ensemble de pulvérisation 40 et une paroi supérieure 54 d'obturation. Il comporte en outre une pièce centrale 56 de fixation des conduites d'évacuation 44A à 44D et au moins un organe 58 de répartition du fluide dans le réceptacle 46.

Le flasque 50 et les parois 52, 54 délimitent un volume 59 d'alimentation.

Le réceptacle intermédiaire 42 est de forme générale cylindrique. Il s'étend suivant un axe vertical A-A' représenté vertical sur la figure 2.

L'axe central A-A' suit l'inclinaison de l'installation 10 par rapport à la verticale, notamment lorsque l'installation 10 est embarquée dans un engin sous-marin 12.

Le flasque de fond 50 obture vers le bas la paroi latérale 52. Il présente sensiblement une forme d'anneau et s'étend autour de la pièce centrale 56.

La conduite d'alimentation 42 est raccordée en amont à la conduite de communication 32.

La conduite d'alimentation 42 débouche dans le flasque de fond 50, sans dépasser à travers celui-ci.

La paroi latérale 52 est de révolution autour de l'axe A-A'. Elle délimite une pluralité d'orifices 60 de passage de fluide vers l'ensemble de pulvérisation 40. Les orifices 60 traversent la paroi latérale 52 pour raccorder le volume d'alimentation 59 à l'ensemble de pulvérisation 40.

Dans cet exemple, et comme on le verra plus bas, les orifices 60 sont répartis sur la hauteur de la paroi latérale 52, et sont répartis angulairement autour de l'axe A-A'.

Ainsi, les orifices 60 délimitent des régions réparties sur la hauteur de la paroi latérale 52 qui sont situées respectivement au-dessus et au-dessous de chaque conduite d'évacuation 44A à 44D.

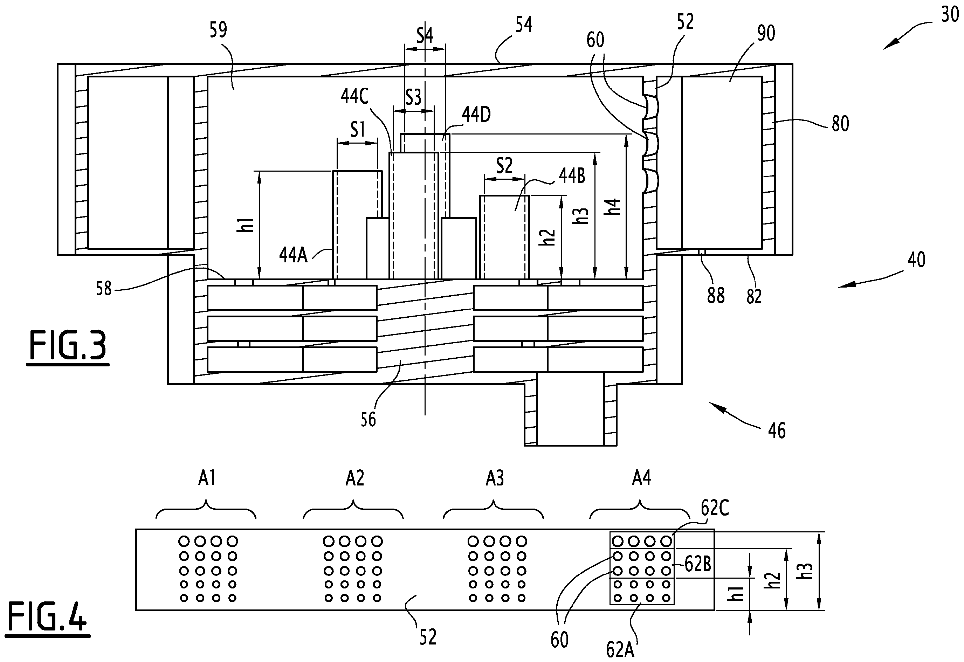

Dans la variante visible en développée sur la Figure 4, les régions 62A, 62B, 62C présentent des surfaces disponibles d'évacuation de fluide vers l'ensemble de pulvérisation 40 par unité de hauteur, qui sont différentes les unes des autres.

Ainsi, la surface d'évacuation de fluide par unité de hauteur dans la région inférieure 62A est distincte de la surface d'évacuation de fluide par unité de hauteur dans la région intermédiaire 62B, et est également distincte de la surface d'évacuation de fluide par unité de hauteur dans la région supérieure 62C.

De plus, la surface d'évacuation de fluide par unité d'angle dans différentes régions angulaires A1, A2, A3 d'orifices 60 situées autour de l'axe A-A' varie d'une région angulaire à l'autre.

Comme on le verra plus bas, ceci permet d'ajuster automatiquement et précisément la quantité de fluide distribué vers l'ensemble de pulvérisation 40 en fonction du débit de fluide reçu et de l'inclinaison de l'installation 10.

La paroi supérieure 54 obture au moins partiellement vers le haut le volume d'alimentation 59. Elle s'étend transversalement par rapport à l'axe A-A'. Comme on l'a vu plus haut, la conduite d'alimentation 42 débouche dans le volume d'alimentation 59.

La pièce centrale 56 s'étend avantageusement dans le flasque de fond 50. Elle délimite une pluralité de passages axiaux recevant les conduites d'évacuation 44A à 44D. La pièce centrale 56 obture ainsi de manière étanche l'espace intermédiaire situé entre les conduites d'évacuation 44A à 44D.

Les organes 58 de répartition du fluide s'étendent transversalement dans le volume d'alimentation 49, avantageusement dans le flasque de fond 50.

Dans l'exemple représenté, le réceptacle 46 comporte une pluralité d'organes 58 disposés en parallèle l'un au-dessus de l'autre. Chaque organe de répartition 58 est par exemple formé par une crépine 70 délimitant des passages 72 de fluide situés en regard de la conduite d'alimentation 42 au point où elle débouche dans le volume d'alimentation 59.

Les crépines 72 s'étendent transversalement en regard de la conduite d'alimentation 42 pour casser le jet de fluide provenant de la conduite 42 et le repartir uniformément dans le volume d'alimentation 59 afin de créer un volume de liquide présentant une surface supérieure sensiblement plane.

Les conduites d'évacuation 44A à 44D débouchent dans le volume d'alimentation 59, à travers la pièce centrale 56. Elles sont ainsi groupées dans une région centrale du volume d'alimentation 59, et délimitent une région périphérique d'étendue supérieure à l'étendue de la région centrale.

Comme illustré par la figure 3, les conduites 44A à 44D présentent avantageusement des hauteurs et/ou des sections transversales internes S1 à S3 différentes. Ainsi, comme illustré par la figure 3, la conduite 44A présente une hauteur H1 inférieure à la hauteur H4 de la conduite 44C. La conduite 44C présente une hauteur H3 inférieure à la hauteur de la conduite 44D. De même, les sections transversales internes S1, S2, S3 des conduites 44A à 44C sont distinctes.

La hauteur H1 en saillie dans le volume 59 est mesurée par exemple à partir de la pièce centrale 56 parallèlement à l'axe A-A'.

Les hauteurs des conduites 44A, 44B, 44C sont ajustées pour qu'elles débouchent respectivement au droit de la première région 62A, au droit de la deuxième région 62B, et au droit de la troisième région 62C des orifices 60 ménagés dans la paroi latérale 52.

Ainsi, en ajustant le rapport relatif entre les sections transversales internes S1, S2, S3 respectives et les aires par unité de hauteur des régions 62A, 62B, 62C, le coefficient de répartition de fluide entre les conduites d'évacuation 44 et l'ensemble de pulvérisation 40 est réglé de manière automatique. Ce coefficient de répartition varie en fonction de la hauteur de liquide présent dans le volume d'alimentation 59, et de l'inclinaison du liquide présent dans le volume d'alimentation 59.

Dans l'exemple représenté sur la figure 2, les conduites 44A à 44D sont réparties autour de l'axe A-A', de sorte qu'il existe un premier secteur angulaire, dans laquelle un premier groupe de conduites 44A à 44C présente une hauteur supérieure à celle d'un deuxième groupe de conduites présent dans un deuxième secteur angulaire.

Ceci permet, en combinaison avec le choix des densités angulaires d'orifice 60 dans les différentes régions angulaires A1, A2, A3, A4 situées en regard des groupes de conduites, d'ajuster le coefficient de répartition en fonction de l'angle d'inclinaison de l'installation 10, notamment lorsque l'installation 10 est embarquée dans un engin sous-marin 12.

Les moyens de réglage 48 sont par exemple formés par un filetage ménagé dans la pièce centrale 56 pour permettre le réglage de la hauteur en saillie de chaque conduite d'évacuation 44A à 44D dans le volume d'alimentation 49.

Comme illustré par la figure 2, la conduite d'alimentation 42 et les conduites d'évacuation 44A à 44D sont avantageusement maintenues par une bride 72 située sous le réceptacle intermédiaire 46.

Elles sont raccordées respectivement aux conduites 32, 34.

L'ensemble de pulvérisation 40 s'étend à l'extérieur de la paroi latérale 52, en regard des orifices 60. Il comporte une paroi périphérique extérieure 80, une paroi inférieure 82 de pulvérisation de fluide et une paroi supérieure 84 d'obturation.

Dans l'exemple représenté sur la figure 2, la paroi périphérique extérieure 80 présente une forme analogue à celle de la paroi latérale 52. Elle s'étend ainsi parallèlement à la paroi latérale 52 avantageusement sur toute la hauteur de la paroi latérale 52.

Les parois 52, 80 délimitent entre elles un volume de douche 90 qui est annulaire dans cet exemple.

La paroi inférieure 82 de pulvérisation s'étend transversalement par rapport à l'axe A-A' entre un bord inférieur de la paroi périphérique 80 et une surface extérieure de la paroi latérale 52.

La paroi de pulvérisation 82 comporte une pluralité de lumières traversantes 88 de dimensions inférieures à celle des orifices 60.

Les lumières 88 s'étendent verticalement entre le volume 90 de douche délimité entre les parois 80, 52 et 84 et l'espace situé sous l'ensemble de pulvérisation 40 dans la cuve 24, sous le dispositif de régulation 30.

Chaque lumière 88 présente par exemple une dimension comprise entre 0,1 mm et 2 mm pour créer, à partir du fluide primaire liquide issu des orifices 60 et reçu dans le volume de douche 90, une pluralité de fines gouttelettes visibles schématiquement sur la figure 1. Les gouttelettes sont destinées à la condensation du gaz présent dans le ciel gazeux 28 pour diminuer la pression dans la cuve 24.

Le fonctionnement de l'installation 10 va maintenant être décrit.

En fonctionnement normal, lorsque de l'énergie est produite par l'installation 10, la source 16 réchauffe le fluide primaire liquide présent dans le circuit primaire 14. Le fluide primaire liquide réchauffé est convoyé à travers la conduite chaude 20 jusqu'à l'échangeur de chaleur 18.

Lorsque la densité du fluide primaire liquide diminue, par exemple lorsque la puissance consommée dans l'engin 12 diminue, la pression du fluide primaire liquide augmente.

Dans ce cas, le fluide primaire liquide monte à travers la conduite de communication 32 jusqu'à la conduite d'alimentation 42 et entre dans le dispositif de régulation 30.

Si le débit de fluide d'alimentation primaire est important, et qu'il forme un jet, il bute contre les organes de répartition de fluide 58. Le jet est cassé pour former un volume contenu de fluide primaire liquide présentant une surface supérieure sensiblement plane.

En fonction de la hauteur de fluide primaire liquide présent dans le volume d'alimentation 59, le fluide primaire liquide noie successivement au moins une conduite 44A à 44D permettant l'évacuation d'une partie de ce fluide primaire vers le volume intérieur de la cuve 24 à travers une conduite d'évacuation 44A à 44D, puis à travers la conduite de retour 34.

Le nombre de conduites 44A, 44B, 44C noyées par le fluide primaire liquide dépend de la hauteur de liquide présent dans le volume d'alimentation 59.

Par ailleurs, en fonction de la hauteur de liquide présent dans le volume d'alimentation 59 en fonction de l'inclinaison de l'axe A-A' par rapport à la verticale 12, le nombre d'orifices 60 placés au contact du liquide varie.

Une quantité déterminée de fluide primaire liquide passe donc à travers les orifices 60 pour atteindre le volume de douche 90. Cette quantité déterminée est fixée par la hauteur relative des parties en saillie des conduites 44A à 44D, et par la densité d'orifices dans les régions 62A à 62C, et dans les régions angulaires A1 à A4.

Le coefficient de répartition du débit de fluide entre le volume de douche 90 et la cuve 26 est donc déterminé par la conception du dispositif 30 et est réglé directement par le dispositif 30 sans intervention extérieure, et sans la présence de composants actifs.

Le débit de fluide évacué vers la cuve 24 est donc variable et est réglé automatiquement par le dispositif de régulation 30, sans intervention d'un opérateur ou sans actionnement d'un régulateur.

Le fluide primaire présent dans le volume de douche 90 est ensuite pulvérisé sous forme de gouttelettes en passant à travers les lumières 88 ménagées dans la paroi inférieure 82 de pulvérisation. Les gouttelettes ainsi formées se dispersent dans le ciel gazeux 28. Ceci condense une partie du ciel gazeux, ce qui contribue à réduire la pression du fluide dans la cuve 24, et par suite au sein du circuit primaire.

Compte tenu de l'absence de composants actifs pour effectuer la régulation, celle-ci se fait de manière fiable et automatique. Par ailleurs, la quantité relative de fluide destinée à la condensation et la quantité relative de fluide destiné à être disposé dans la cuve 26 se règlent automatiquement et de manière sélective en fonction du débit de fluide introduit dans l'enceinte à pressuriser 19 et de l'inclinaison relative de l'enceinte 19.

Cette régulation fiable est obtenue de manière peu coûteuse par un simple dispositif mécanique sans pièce mobile.

Au contraire, lorsque la pression du fluide primaire liquide diminue au dessous de sa consigne, du fluide sous pression est alors aspiré dans le fond de la cuve 24 à travers le piquage 34 et la valve 34A pour être ramené dans le circuit primaire via la conduite de communication 32.

Dans une variante, l'installation 10 est fixée sur le sol. Cette installation peut être sur terre, ou sur le fond d'une étendue d'eau.

Dans encore une autre variante, l'installation 10 est dépourvue de coeur de réacteur nucléaire. Elle comprend une source d'énergie 16 dépourvue de combustible nucléaire.

## Revendications

1. Dispositif passif (30) de régulation de pression dans une enceinte pressurisée (19), comprenant :
- au moins un ensemble (40) de pulvérisation de fluide dans l'enceinte (19) ;
- une conduite (42) d'alimentation de fluide destinée à fournir du fluide à l'ensemble de pulvérisation (40) ;
**caractérisé en ce que** le dispositif (30) comporte :
- un réceptacle intermédiaire (46) de répartition du fluide, interposé entre la conduite d'alimentation (42) et l'ensemble de pulvérisation (40), le réceptacle intermédiaire (46) étant raccordé en amont à la conduite d'alimentation (42) et comportant une paroi latérale (52) d'évacuation de fluide délimitant au moins un orifice traversant (60) raccordé à l'ensemble de pulvérisation (40), et
- au moins une conduite (44A à 44D) d'évacuation de fluide vers l'enceinte (19) faisant saillie dans le réceptacle intermédiaire (46) en regard de la paroi latérale (52).

2. Dispositif (30) selon la revendication 1, **caractérisé en ce qu'**il comporte une pluralité de conduites d'évacuation (44A à 44D) faisant saillie dans le réceptacle intermédiaire (46), au moins deux conduites d'évacuation (44A à 44D) débouchant à des hauteurs différentes dans le réceptacle intermédiaire (46).

3. Dispositif (30) selon la revendication 2, **caractérisé en ce qu'**au moins deux conduites d'évacuation (44A à 44D) faisant saillie dans le réceptacle intermédiaire (46) présentent des sections transversales internes distinctes.

4. Dispositif (30) selon l'une quelconque des revendications précédentes, **caractérisé en ce que** la ou chaque conduite d'évacuation (44A à 44D) est disposée dans une région centrale du réceptacle intermédiaire (46), le réceptacle intermédiaire (46) comportant une région périphérique située autour de la zone centrale dans laquelle débouche la conduite d'alimentation (42).

5. Dispositif (30) selon l'une quelconque des revendications précédentes, **caractérisé en ce qu'**il comporte des moyens (48) de réglage de la hauteur de la ou de chaque conduite d'évacuation (44A à 44D) faisant saillie dans le réceptacle.

6. Dispositif (30) selon l'une quelconque des revendications précédentes, **caractérisé en ce que** la paroi latérale (52) délimite une pluralité d'orifices traversants (60) répartis sur sa hauteur.

7. Dispositif (30) selon la revendication 6, **caractérisé en ce que** la section totale des orifices traversants (60) situés au dessus de la ou de chaque conduite d'évacuation (44A à 44D) sur la paroi latérale (52) est distincte de la section totale des orifices traversants situés au droit de la conduite d'évacuation (44A à 44D).

8. Dispositif selon l'une quelconque des revendications précédentes, **caractérisé en ce que** la paroi latérale (52) délimite une pluralité d'orifices traversants (60) répartis angulairement autour d'un axe (A-A') du réceptacle intermédiaire (46).

9. Dispositif (30) selon l'une quelconque des revendications précédentes, **caractérisé en ce qu'**il comporte un organe (58) de répartition du fluide provenant de la conduite d'alimentation (42), l'organe de répartition (58) étant disposé en regard de la conduite d'alimentation (42).

10. Dispositif (30) selon l'une quelconque des revendications précédentes, **caractérisé en ce qu'**il comporte un flasque de fond (50), obturant vers le bas la paroi latérale (52), la conduite d'alimentation (42) débouchant dans le flasque de fond (50), ou à travers le flasque de fond (50).

11. Dispositif (30) selon l'une quelconque des revendications précédentes, **caractérisé en ce que** l'ensemble (40) de pulvérisation de fluide est disposé à l'extérieur et autour de la paroi latérale (52), l'ensemble de pulvérisation (40) comportant un volume de douche (90), chaque orifice traversant (60) raccordant le réceptacle intermédiaire (46) au volume de douche (90).

12. Dispositif (30) selon la revendication 11, **caractérisé en ce que** l'ensemble de pulvérisation (40) comporte une paroi inférieure (82) délimitant une pluralité de lumières (88) de formation de gouttelettes.

13. Enceinte pressurisée (19), **caractérisée en ce qu'**elle comporte une cuve (24) contenant un liquide (26) et un ciel gazeux (28), l'enceinte (19) comportant un dispositif (30) selon l'une quelconque des revendications précédentes, disposé dans la cuve (24), l'ensemble de pulvérisation (40) étant disposé dans le ciel gazeux (28) de la cuve (24), les conduites d'évacuation (44) débouchant dans le liquide (26).

14. Installation (10) de production d'énergie comportant une source d'énergie (16), un échangeur thermique (18) et un circuit primaire (14) de circulation de fluide, raccordant l'échangeur thermique (18) et la source (16) **caractérisée en ce qu'**elle comporte une enceinte (19) selon la revendication 13, raccordée au circuit primaire (14).

15. Installation (10) selon la revendication 14, **caractérisée en ce qu'**elle est embarquée dans un engin sous-marin (12).

## Patentansprüche

1. Passive Vorrichtung (30) zur Regelung des Drucks in einem unter Druck stehenden, abgeschlossenen Raum (19), aufweisend:
- wenigstens eine Einrichtung (40) zur Zerstäubung von Fluid in dem abgeschlossenen Raum (19),
- eine Leitung (42) zur Zuführung von Fluid, die dazu bestimmt ist, das Fluid an die Zerstäubungs-Einrichtung (40) zuzuführen,
**dadurch gekennzeichnet, dass** die Vorrichtung (30) aufweist:
- ein Zwischenbehältnis (46) zur Verteilung des Fluid, das zwischen der Zuführungs-Leitung (42) und der Zerstäubungs-Einrichtung (40) angeordnet ist, wobei das Zwischenbehältnis (46) stromaufwärts an die Zuführungs-Leitung (42) angeschlossen ist und aufweist eine Seitenwand (52) zur Fluidevakuierung, die wenigstens eine Durchgangsöffnung (60) begrenzt, die mit der Zerstäubungs-Einrichtung (40) verbunden ist, und
- wenigstens eine Leitung (44A bis 44D) zur Evakuierung von Fluid zu dem geschlossenen Raum (19) hin, die gegenüber der Seitenwand (52) in das Zwischenbehältnis (46) vorsteht.

2. Vorrichtung (30) gemäß Anspruch 1, **dadurch gekennzeichnet, dass** sie aufweist eine Mehrzahl von Evakuierungs-Leitungen (44A bis 44D), die in das Zwischenbehältnis (46) vorstehen, wobei wenigstens zwei Evakuierungs-Leitungen (44A bis 44D) auf unterschiedlichen Höhen in dem Zwischenbehältnis (46) ausmünden.

3. Vorrichtung (30) gemäß Anspruch 2, **dadurch gekennzeichnet, dass** wenigstens zwei Evakuierungs-Leitungen (44A bis 44D) in das Zwischenbehältnis (46) vorstehen, die unterschiedliche innere Querschnitte haben.

4. Vorrichtung (30) gemäß irgendeinem der vorhergehenden Ansprüche, **dadurch gekennzeichnet, dass** die oder jede Evakuierungs-Leitung (44A bis 44D) in einem zentralen Bereich des Zwischenbehältnis (46) angeordnet ist, wobei das Zwischenbehältnis (46) einen peripheren Bereich aufweist, der um den zentralen Bereich herum angeordnet ist und in welchem die Versorgungs-Leitung (42) ausmündet.

5. Vorrichtung (30) gemäß irgendeinem der vorhergehenden Ansprüche, **dadurch gekennzeichnet, dass** sie aufweist Mittel (48) zum Einstellen der Höhe der oder jeder Evakuierungs-Leitung (44A bis 44D), die in das Behältnis vorstehen.

6. Vorrichtung (30) gemäß irgendeinem der vorhergehenden Ansprüche, **dadurch gekennzeichnet, dass** die Seitenwand (52) eine Mehrzahl von Durchgangsöffnungen (60) begrenzt, die über ihre Höhe verteilt sind.

7. Vorrichtung (30) gemäß Anspruch 6, **dadurch gekennzeichnet, dass** der Gesamtquerschnitt der Durchgangsöffnungen (60), die über der oder jeder Evakuierungs-Leitung (44A bis 44D) an der Seitenwand (52) angeordnet sind, von dem Gesamtquerschnitt der Durchgangsöffnungen verschieden ist, die genau unter der Evakuierungs-Leitung (44A bis 44D) angeordnet sind.

8. Vorrichtung gemäß irgendeinem der vorhergehenden Ansprüche, **dadurch gekennzeichnet, dass** die Seitenwand (52) eine Mehrzahl von Durchgangsöffnungen (60) begrenzt, die um die Achse (A-A') des Zwischenbehältnisses (46) herum winkelverteilt sind.

9. Vorrichtung (30) gemäß irgendeinem der vorhergehenden Ansprüche, **dadurch gekennzeichnet, dass** sie aufweist ein Organ (58) zur Verteilung des Fluid, das von der Zuführungs-Leitung (42) stammt, wobei das Verteilungs-Organ (58) der Zuführungs-Leitung (42) gegenüber angeordnet ist.

10. Vorrichtung (30) gemäß irgendeinem der vorhergehenden Ansprüche, **dadurch gekennzeichnet, dass** sie einen Bodenflansch (50) aufweist, der die Seitenwand (52) nach unten hin verschließt, wobei die Zuführungs-Leitung (42) in dem Bodenflansch (50) oder durch den Bodenflansch (50) hindurch ausmündet.

11. Vorrichtung (30) gemäß irgendeinem der vorhergehenden Ansprüche, **dadurch gekennzeichnet, dass** die Einrichtung (40) zur Zerstäubung von Fluid an der Außenseite und um die Seitenwand (52) herum angeordnet ist, wobei die Zerstäubungs-Einrichtung (40) aufweist ein Sprüh-Volumen (90), wobei jede Durchgangsöffnung (60) das Zwischenbehältnis (46) mit dem Sprüh-Volumen (90) verbindet.

12. Vorrichtung (30) gemäß Anspruch 11, **dadurch gekennzeichnet, dass** die Einrichtung zur Zerstäubung (40) aufweist eine Innenwand (82), die eine Mehrzahl von Löchern (88) zur Bildung von Tröpfchen begrenzt.

13. Abgeschlossener, unter Druck stehender Raum (19), **dadurch gekennzeichnet, dass** er aufweist einen Tank (24), der eine Flüssigkeit (26) enthält, und einen Sprüh-Himmel (28), wobei der abgeschlossene Raum (19) aufweist eine Vorrichtung (30) gemäß irgendeinem der vorhergehenden Ansprüche, die in dem Tank (24) angeordnet ist, wobei die Zerstäubungs-Einrichtung (40) in dem Sprüh-Himmel (28) des Tanks (24) angeordnet ist, wobei die Evakuierungs-Leitungen (44) in der Flüssigkeit (26) ausmünden.

14. Installation (10) zur Produktion von Energie, aufweisend eine Energie-Quelle (16), einen Wärmetauscher (18) und einen Primärkreis (14) zur Zirkulation von Fluid, welcher den Wärmetauscher (18) und die Quelle (14) verbindet, **dadurch gekennzeichnet, dass** sie aufweist einen abgeschlossenen Raum (19) gemäß Anspruch 13, der mit dem Primärkreis (14) verbunden ist.

15. Installation (10) gemäß Anspruch 14, **dadurch gekennzeichnet, dass** sie in einem Unterwassergerät (12) untergebracht ist.

## Claims

1. A passive pressure regulating device (30) in a pressurised chamber (19) comprising:
- at least one spray assembly (40) for spraying fluid into the chamber (19) ;
- a fluid feed pipe (42) intended to feed fluid to the spray assembly (40);
**characterized in that** the device (30) comprises:
- an intermediate fluid-distributing receptacle (46) positioned between the feed pipe (42) and the spray assembly (40), the intermediate receptacle (46) being connected upstream to the feed pipe (42) and comprising a fluid-evacuating sidewall (52) delimiting at least one through orifice (60) connected to the spray assembly (40), and
- at least one evacuation pipe (44A to 44D) evacuating fluid towards the chamber (19) and projecting into the intermediate receptacle (46) opposite the sidewall (52).

2. The device (30) according to claim 1, **characterized in that** it comprises a plurality of evacuation pipes (44A to 44D) projecting into the intermediate receptacle (46), at least two evacuation pipes (44A to 44D) opening into the intermediate receptacle (46) at different heights.

3. The device (30) according to claim 2, **characterized in that** at least two evacuation pipes (44A to 44D) projecting into the intermediate receptacle (46) have different inner cross-sections.

4. The device (30) according to any of the preceding claims, **characterized in that** the or each evacuation pipe (44A to 44D) is arranged in a central region of the intermediate receptacle (46), the intermediate receptacle (46) comprising a peripheral region located around the central zone into which the feed pipe (42) leads.

5. The device (30) according to any of the preceding claims, **characterized in that** it comprises means (48) for adjusting the height of the or of each evacuation pipe (44A to 44D) projecting into the receptacle.

6. The device (30) according to any of the preceding claims, **characterized in that** the sidewall (52) delimits a plurality of through orifices (60) distributed over the height thereof.

7. The device (30) according to claim 6, **characterized in that** the total cross-section of the through orifices (60) positioned above the or each evacuation pipe (44A to 44D) on the sidewall (52) differs from the total cross-section of the through orifices at the height of the evacuation pipe (44A to 44D).

8. The device according to any of the preceding claims, **characterized in that** the sidewall (52) delimits a plurality of through orifices (60) distributed angularly around an axis (A-A') of the intermediate receptacle (46).

9. The device (30) according to any of the preceding claims, **characterized in that** it comprises a member (58) for distributing the fluid from the feed pipe (42), the distributing member (58) being arranged opposite the feed pipe (42).

10. The device (30) according to any of the preceding claims, **characterized in that** it comprises a bottom plate (50) closing the sidewall (52) downwardly, the feed pipe (42) opening into the bottom plate (50) or through the bottom plate (50).

11. The device (30) according to any of the preceding claims, **characterized in that** the fluid spray assembly (40) is arranged outside and around the sidewall (52), the spray assembly (40) comprising a shower volume (90), each through orifice (60) connecting the intermediate receptacle (46) to the shower volume (90).

12. The device (30) according to claim 11, **characterized in that** the spray assembly (40) comprises a lower wall (82) delimiting a plurality of droplet-forming lumens (88).

13. A pressurised chamber (19), **characterized in that** it comprises a tank (24) containing a liquid (26) and a gas overhead (28), the chamber (19) comprising a device (30) according to any of the preceding claims arranged in the tank (24), the spray assembly (40) being arranged in the gas overhead (28) of the tank (24), the evacuation pipes (44) leading into the liquid (26).

14. A power-producing installation (10) comprising an energy source (16), a heat exchanger (18) and a primary fluid circulation circuit (14) connecting the heat exchanger (18) with the source (16), **characterized in that** it comprises a chamber (19) according to claim 13 connected to the primary circuit (14).

15. The installation (10) according to claim 14, **characterized in that** it is on board a submarine (12).
